# EUROPÄISCHE PATENTANMELDUNG

(11) **EP 1 547 747 A1**
(43) Veröffentlichungstag der Anmeldung: **29.06.2005**
(21) Anmeldenummer: 04405583.8
(22) Anmeldetag: 16.09.2004
(51) Int. Cl.: B29C 45/27, B29C 45/26

(54) **Heisskanal-Mehrfachspritzwerkzeug**

(30) Priorität: 23.12.2003 CH 22122003
(71) Anmelder: Schöttli AG, 8253 Diessenhofen (CH)
(72) Erfinder: Schöttli, Martin, 8254 Badadingen (CH); Christinger, Adrian, 8253 Diessenhofen (CH)
(74) Vertreter: Gachnang, Hans Rudolf

(57) **Zusammenfassung**

Bei einem Heisskanal-Mehrfachspritzwerkzeug sind die Formräume (15) für die Werkstücke je mit zwei Einspritzdüsen (9) und die Einspritzdüsen (9) mit je zwei Formräumen (15) verbunden. Die Einspritzdüsen (9) sind zwischen den Formräumen (15) angeordnet. Dadurch ergibt sich eine niedrige Bauhöhe des unteren Werkzeugteils (1).

## Beschreibung

Gegenstand der Erfindung ist ein Heisskanal-Mehrfachspritzwerkzeug gemäss des Oberbegriff des Patentanspruchs 1.

Das Spritzen von dünnwandigen rohrförmigen Werkstücken, wie Einwegspritzenzylinder, Tamponapplikatoren, Tuben etc., erfolgt meist durch ein axiales oder radiales Einführen des flüssigen Kunststoffs in den Formraum mit einer axial oder radial angeordneten beheizten Einspritzdüse. Die axiale Anordnung hat aber den Nachteil, dass das Werkzeug sehr lang wird. Es sind daher auch bereits Werkzeuge bekannt, mit seitlicher Einspritzung, wie sie in der US-A-4,184,836 offenbart werden. Die seitliche Einspritzung in den Formraum bedingt entweder eine asymmetrische Gestaltung des Werkzeugs, was oft nicht möglich ist, um eine gleichmässige Verteilung des Kunststoffs bzw. ein Wegbiegen des Formkerns durch den Einspritz- und/oder den Nachdruck und eine ungleichmässige Wärmeverteilung in der Kavität zu verhindern.

Eine Aufgabe der vorliegenden Erfindung ist die Schaffung eines Heisskanal-Mehrfachspritzwerkzeugs, mit dem rohrförmige dünnwandige Werkstücke an zwei Stellen mittels Heisskanaldüsen anspritzbar sind.

Gelöst wird diese Aufgabe durch ein Heisskanal-Mehrfachspritzwerkzeug gemäss den Merkmalen des Patentanspruchs 1. Vorteilhafte Ausgestaltungen des Werkzeugs sind in den abhängigen Ansprüchen definiert.

Es gelingt durch die Anordnung der Einspritzdüsen und der beheizten Anspritzkanäle zwischen den Formräumen und durch die Verbindung jeder Einspritzdüse mit den beiden benachbarten Formräumen eine gleichmässige Einspritzung des Kunststoffs in die Formräume und zudem eine gleichmässige Verteilung der von den Einspritzdüsen ausgehenden Wärme innerhalb des Werkzeugs zu erreichen. Es lassen sich somit im Verhältnis zum Durchmesser auch sehr lange Werkstücke einwandfrei spritzen.

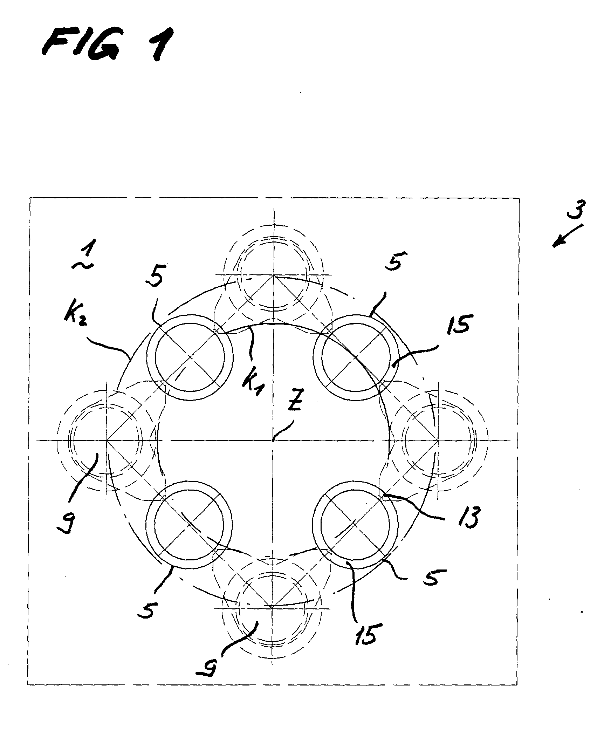

Anhand eines illustrierten Ausführungsbeispiels mit vier Kavitäten wird die Erfindung näher erläutert. Es zeigen
- Figur 1: eine Aufsicht auf den feststehenden Werkzeugteil mit den Einspritzdüsen und

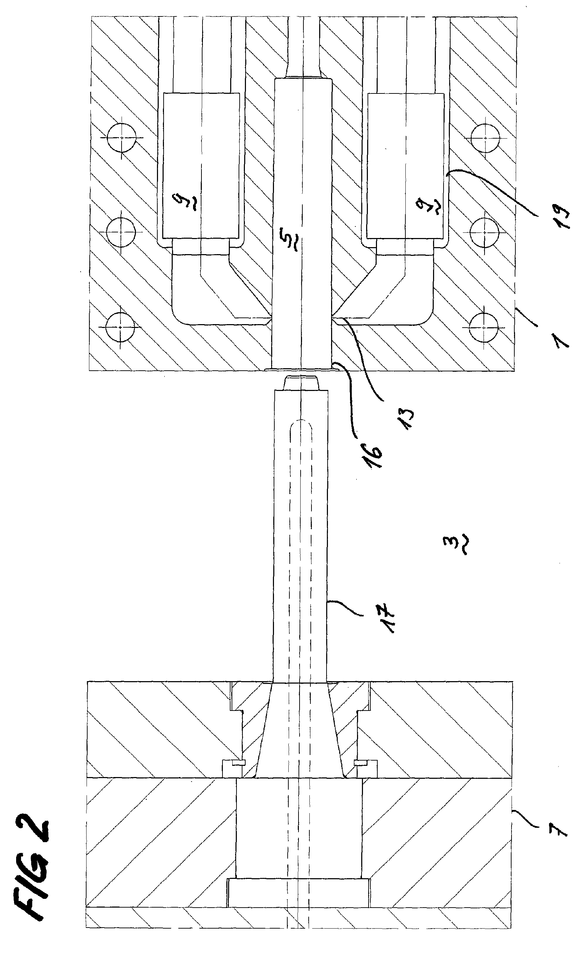

- Figur 2: einen Schnitt längs Linie II-II in Figur 1 durch beide Werkzeugteile.

In der Aufsicht auf den unteren, den feststehenden eines Vierfach-Spritzwerkzeuges 3 bildenden Werkzeugteil 1 sind um das Zentrum Z herum vier Kavitäten 5 zur Herstellung länglicher rohrförmiger Werkstücke ersichtlich. Diese sind auf einem zum Zentrum Z konzentrischen ersten Kreis K₁ angeordnet. Auf einem weiteren zum Zentrum Z konzentrischen zweiten Kreis K₂ sind vier Einspritzdüsen 9 eingesetzt, die mit einer gemeinsamen zentralen Zuleitung (nicht sichtbar) für flüssigen Kunststoff verbunden sind. Jede der Einspritzdüsen 9 ist durch einen Düsenkanal 13 mit den beiden benachbarten Formräumen 15 für die Werkstücke verbunden. Die Einspritzstellen an den Formräumen 15 liegen diagonal zur Symmetrieachse der Formräume 15 zueinander und im dargestellten Beispiel unterhalb des Randes 16 der offenen Seite des Werkstücks.

Die Einspritzung des flüssigen Kunststoffs erfolgt auf diese Weise symmetrisch und damit auch die Erwärmung und die vom Kunststoff ausgeübten Druckkräfte auf den fliegend gelagerten oder auch im Durchmesser gehaltenen, in den Formraum 15 hineinragenden Dorn 17 an einem oberen Werkzeugteil 7. Dadurch kann eine durch Druckkraft oder Wärmedehnung verursachte Auslenkung verhindert werden. Nicht nur die Einspritzung des flüssigen Kunststoffs erfolgt symmetrisch, sondern auch die Erwärmung des unteren Werkzeugteils 1 und die Kühlung erfolgen innerhalb des Werkzeugs 1 bezüglich der Kavitäten 5 völlig symmetrisch.

Die Anordnung der Einspritzdüsen 9 samt deren Heizung 19 neben den Kavitäten 5 für die Werkstücke führt zu einer äusserst niedrigen Bauhöhe des unteren Werkzeugteils.

## Patentansprüche

1. Heisskanal-Mehrfachspritzwerkzeug zur Herstellung von dünnwandigen rohrförmigen Werkstücken, umfassend ein erster Werkzeugteil (1) mit die Aussenkonturen des Werkstücks bildenden Formräumen (15) und einem zweiten, oberen Werkzeugteil (7) mit den Formräumen (15) entsprechenden Formkernen (17), Einspritzdüsen (9) mit Anspritzkanälen (13), die mit den Formräumen (15) in Verbindung stehen sowie Mittel zum Kühlen der Formräume (15), **dadurch gekennzeichnet, dass** jede Einspritzdüse (9) mit je zwei Formräumen (15) und jeder Formraum (15) mit je zwei Einspritzdüsen (9) verbunden sind.

2. Heisskanal-Mehrfachspritzwerkzeug nach Anspruch 1, **dadurch gekennzeichnet, dass** die Einspritzdüsen (9) und die Formräume (15) auf konzentrischen Kreisen (K₁,K₂) angeordnet sind.

3. Heisskanal-Mehrfachspritzwerkzeug nach einem der Ansprüche 1 oder 2, **dadurch gekennzeichnet, dass** die Einspritzdüsen (9) zwischen jeweils zwei benachbarten Formräumen (15) liegen.

4. Heisskanal-Mehrfachspritzwerkzeug nach einem der Ansprüche 1 bis 3, **dadurch gekennzeichnet, dass** die Düsenkanäle (13) der Einspritzdüsen (9) jeweils im wesentlichen einander diagonal gegenüber liegend in die Formräume (15) münden.
